# EUROPEAN PATENT APPLICATION

(11) **EP 4 687 202 A1**
(43) Date of publication of application: **04.02.2026**
(21) Application number: 25192307.4
(22) Date of filing: 29.07.2025
(51) Int. Cl.: H01M 50/204, H01M 50/583, H02H 7/18

(54) **COMBINER CABINET AND ENERGY STORAGE SYSTEM**

(30) Priority: 31.07.2024 CN 202411046029; 31.07.2024 CN 202421848722 U; 31.07.2024 CN 202421848695 U; 25.10.2024 WO PCT/CN2024/127444; 25.10.2024 WO PCT/CN2024/127450; 28.10.2024 WO PCT/CN2024/127602
(71) Applicant: Eve Energy Storage Co., Ltd, Wuhan, Hubei 430000 (CN)
(72) Inventor: CHEN, Hao, Wuhan, Hubei, 430000 (CN); ZHANG, Han, Wuhan, Hubei, 430000 (CN); FENG, Chaojun, Wuhan, Hubei, 430000 (CN); GUI, Ke, Wuhan, Hubei, 430000 (CN)
(74) Representative: Berggren Oy

(57) **Abstract**

A combiner cabinet and an energy storage system are provided. The combiner cabinet includes a cabinet body (10), a cabinet door (11), and an electrical component assembly (14) mounted inside the cabinet body (10). The electrical component assembly (14) includes a positive electrode part (70), a negative electrode part (80), and a control part (100). The positive electrode part (70) is electrically connected to a positive output terminal of an external high-voltage box and a positive electrode of a battery pack. The negative electrode part (80) is electrically connected to a negative output terminal of the external high-voltage box and a negative electrode of the battery pack. The control part (100) is electrically connected to a communication signal terminal of the external high-voltage box. The control part (100) and the positive electrode part (70) are arranged along a length direction or a width direction of the combiner cabinet.

## Description

### TECHNICAL FIELD

The present disclosure relates to a field of energy storage technologies, and in particular, to a combiner cabinet and an energy storage system.

### BACKGROUND

In existing art, energy storage systems generally include combiner cabinets in a form of independent equipment cabinets. The energy storage systems achieve convergence of external high-voltage boxes through the combiner cabinets.

The combiner cabinets have a relatively single function. In order to achieve control of input or output currents/voltages, it is necessary to use another electric control cabinet existed in the form of independent equipment cabinets, and thus the combiner cabinets occupy a large space.

### SUMMARY

A combiner cabinet is provided by the present disclosure. The combiner cabinet includes a cabinet body, a cabinet door, and an electrical component assembly. The cabinet door is connected to the cabinet body and configured to open and close the cabinet body.

The electrical component assembly is mounted inside a mounting cavity of the cabinet body. The electrical component assembly includes a positive electrode part, a negative electrode part, and a control part. The positive electrode part is configured to be electrically connected to a positive output terminal of an external high-voltage box and a positive electrode of a battery pack. The negative electrode part is configured to be electrically connected to a negative output terminal of the external high-voltage box and a negative electrode of the battery pack. The control part is configured to be electrically connected to a communication signal terminal of the external high-voltage box to detect states of the external high-voltage box and the battery pack. The control part and the positive electrode part are arranged along a length direction or a width direction of the combiner cabinet.

An energy storage system is further provided by the present disclosure. The energy storage system includes the above-mentioned combiner cabinet.

### BRIEF DESCRIPTION OF THE DRAWINGS

FIG. 1 is an exploded view of a combiner cabinet according to some embodiments of the present disclosure.
FIG. 2 is a schematic structural view of layer plates in FIG. 1.
FIG. 3 is a circuit schematic diagram of the combiner cabinet according to some embodiments of the present disclosure.
FIG. 4 is a perspective view at a first angle of the combiner cabinet with a cabinet door removed according to some embodiments of the present disclosure.
FIG. 5 is a perspective view at a second angle of the combiner cabinet with the cabinet door removed according to some embodiments of the present disclosure.
FIG. 6 is a schematic structural view of the cabinet door in FIG. 1.
FIG. 7 is a perspective view at a third angle of the combiner cabinet with the cabinet door removed according to some embodiments of the present disclosure.
FIG. 8 is a perspective view at a fourth angle of the combiner cabinet with the cabinet door removed according to some embodiments of the present disclosure.
FIG. 9 is a perspective view at a fifth angle of the combiner cabinet with a cabinet door removed according to some embodiments of the present disclosure.

### Reference numerals:

10, cabinet body; 11, cabinet door; 12, mounting cavity; 121, first mounting cavity; 123, second mounting cavity; 1211, first mounting space; 1213, second mounting space; 13, first sidewall; 14, electrical component assembly; 15, second sidewall; 17, third sidewall; 18, top wall; 19, bottom wall; 1010, air outlet; 1030, air inlet; 20, layer plate; 21, first layer plate; 23, second layer plate; 25, third layer plate; 31, battery management system (BMS) control member; 33, signal relay; 35, air switch; 36, line groove; 37, connecting terminal; 38, AC/DC power supply; 40, first operation module; 41, indicator lamp module; 411, operation indicator lamp; 413, fault indicator lamp; 415, closing indicator lamp; 412, over-high temperature indicator lamp; 414, voltage 24V indicator lamp; 416, SOC low indicator lamp; 43, switch module; 431, remote/local control switch; 433, start/stop control switch; 435, silencing control switch; 437, emergency stop switch; 45, buzzer; 47, display module; 50, second operation module; 60, warning module; 601, first filter mesh; 602, second filter mesh; 603, insulating plate; 70, positive electrode part; 71, positive fuse; 72, positive high-voltage relay; 73, positive electrode interface; 74, circuit breaker; 741, first circuit breaker; 743, second circuit breaker; 701, first copper bar; 75, cluster high-voltage positive wiring copper bar; 76, cluster high-voltage positive electrode-to-circuit breaker copper bar; 77, circuit breaker-to-output positive electrode copper bar; 80, negative electrode part; 801, second copper bar; 81, negative fuse; 82, negative high-voltage relay; 83, negative electrode interface; 85, cluster high-voltage negative wiring copper bar; 86, cluster high-voltage negative electrode-to-circuit breaker copper bar; 87, circuit breaker-to-output negative electrode copper bar; 90, wire inlet; 91, pre-charge resistance; 100, control part; 101, first sub-control part; 103, second sub-control part; 200, adjustment indicating part; 300, auxiliary-power part; 301, auxiliary-power positive fuse; 303, auxiliary-power negative fuse; 305, auxiliary-power positive interface; 307, auxiliary-power negative interface; 400, surge protection part; 401, first surge fuse; 405, surge protector; 403, second surge fuse.

### DETAILED DESCRIPTION

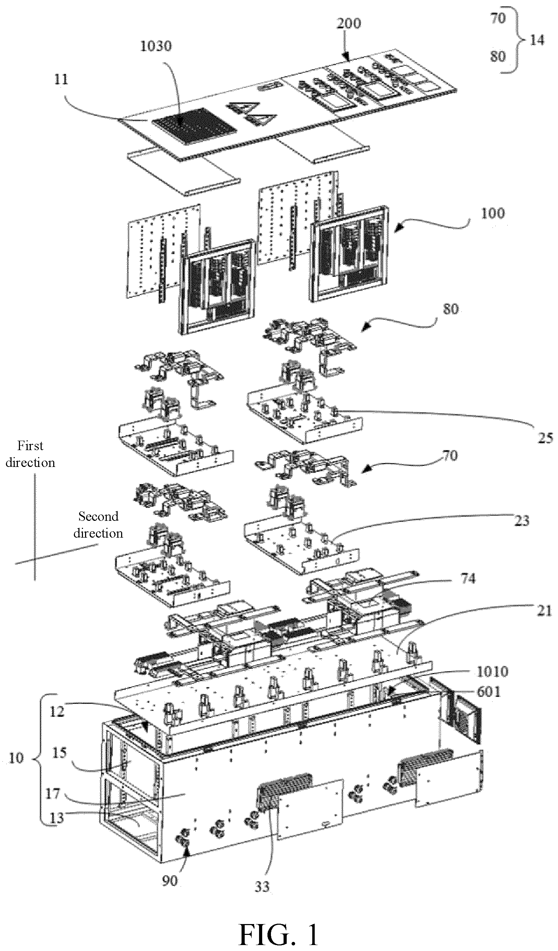

Referring to FIG. 1, a combiner cabinet is provided by the embodiments of the present disclosure. The combiner cabinet includes a cabinet body 10 and a cabinet door 11. The cabinet body 10 is formed with a mounting cavity 12. The cabinet door 11 is connected to the cabinet body 10. The cabinet door 11 is configured to expose or shield the mounting cavity 12. In other words, the cabinet door 11 is configured to open and close the cabinet body 10. The layer plate 20 is mounted inside the mounting cavity 12. The cabinet door 11 may be rotatably connected to the cabinet body 10.

The cabinet body 10 may include a first sidewall 13, a second sidewall 15, and a third sidewall 17. The first sidewall 13, the second sidewall 15, the third sidewall 17 define the mounting cavity 12. The second sidewall 15 and the third sidewall 17 are oppositely arranged. The first sidewall 13 and the cabinet door 11 are oppositely arranged. The first sidewall 13 is located between the second sidewall 15 and the third sidewall 17. Two opposite sides of the first sidewall 13 may be connected to the second sidewall 15 and the third sidewall 17, respectively.

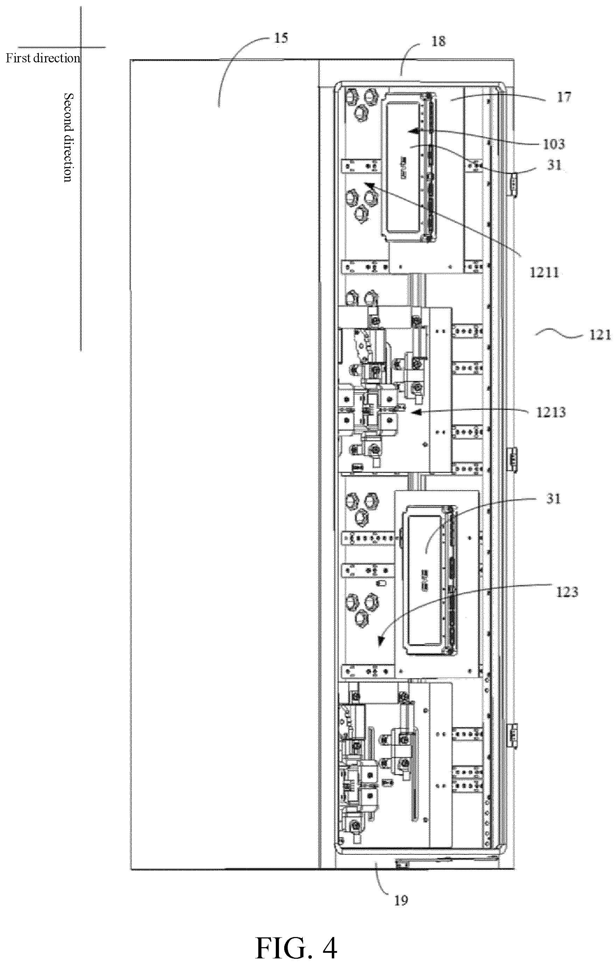

Referring to FIG. 4 in combination with FIG. 1, the cabinet body 10 further includes a top wall 18 and a bottom wall 19. It can be easily understood that the top wall 18 is located at a top part of the cabinet body 10, and the bottom wall 19 is located at a bottom part of the cabinet body 10. The top wall 18, the first sidewall 13, and the bottom wall 19 are arranged in sequence along a height direction of the combiner cabinet. A direction along which the cabinet door 11 and the first sidewall 13 are arranged is a first direction (or a width direction of the cabinet body 10). A direction along which the top wall 18 and the bottom wall 19 are arranged is a second direction (or the height direction of the cabinet body 10). The first direction is perpendicular to the second direction.

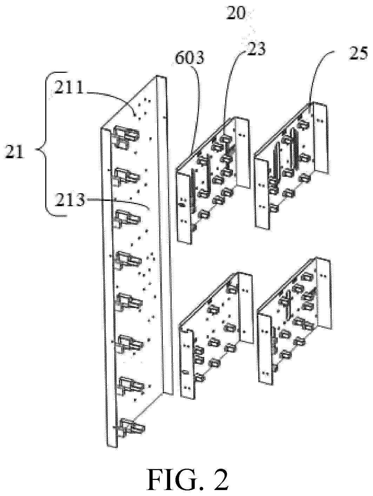

Referring to FIG. 2, the combiner cabinet further includes a layer plate 20. The layer plate 20 is mounted inside the mounting cavity 12 of the cabinet body 10. The layer plate 20 may be configured to mount an electrical component assembly 14. The layer plate 20 is disposed between the cabinet door 11 and the first sidewall 13. The layer plate 20 and the cabinet door 11 are oppositely arranged. The first sidewall 13, the layer plate 20, and the cabinet door 11 may be arranged along the first direction, i.e., the width direction of the combiner cabinet. Two opposite sides of the layer plate 20 may be connected to the second sidewall 15 and the third sidewall 17, respectively.

The electrical component assembly 14 includes a plurality of electrical components, if all of the electrical components are mounted on a same plane, the cabinet body 10 will become very large. In order to further reduce a volume of the combiner cabinet, there may be a plurality of layer plates 20. The plurality of layer plates 20 may be arranged along the first direction, i.e., the width direction of the combiner cabinet. In some embodiments, the layer plates 20 may include a first layer plate 21 and a second layer plate 23 arranged in sequence along the first direction (i.e., the width direction of the combiner cabinet). The first layer plate 21 and the second layer plate 23 are both configured to mount the electrical component assembly 14. The second layer plate 23 is located between the first layer plate 21 and the cabinet door 11. Along the width direction of the combiner cabinet, a projection of at least a part of the first layer plate 21 on the cabinet door 11 is located above a projection of the second layer plate 23 on the cabinet door 11. In the embodiments of the present disclosure, the direction along which the cabinet door 11 and the first sidewall 13 are arranged is the first direction. The electrical component assembly 14 is disposed inside the mounting cavity 12, and a positive electrode part 70 and a negative electrode part 80 of the electrical component assembly 14 are arranged along the first direction, so that a distance between the electrical components located at two ends is relatively close, and a required wiring distance between the electrical components is short, which is convenient for operators to operate.

The layer plates 20 may further include a third layer plate 25. The third layer plate 25 is configured to mount the electrical component assembly 14. The first layer plate 21 is closer to the first sidewall 13 relative to the second layer plate 23 and the third layer plate 25. The third layer plate 25 is closer to the cabinet door 11 relative to the first layer plate 21 and the second layer plate 23. The second layer plate 23 is located between the first layer plate 21 and the third layer plate 25. Along the width direction of the combiner cabinet, a projection of at least a part of the first layer plate 21 on the cabinet door 11 is located above a projection of the third layer plate 25 on the cabinet door 11. In some embodiments, the first layer plate 21 may be mounted on the first sidewall 13. In other embodiments, two opposite sides of the first layer plate 21 may be connected to the second sidewall 15 and the third sidewall 17, respectively.

The combiner cabinet further includes the electrical component assembly 14. The electrical component assembly 14 is mounted inside the mounting cavity 12 of the cabinet body 1. The electrical component assembly 14 may include the positive electrode part 70 and the negative electrode part 80. The positive electrode part 70 and the negative electrode part 80 are arranged at intervals. The positive electrode part 70 is configured to be electrically connected to a positive output terminal of an external high-voltage box and a positive electrode of a battery pack. The negative electrode part 80 is configured to be electrically connected to a negative output terminal of the external high-voltage box and a negative electrode of the battery pack.

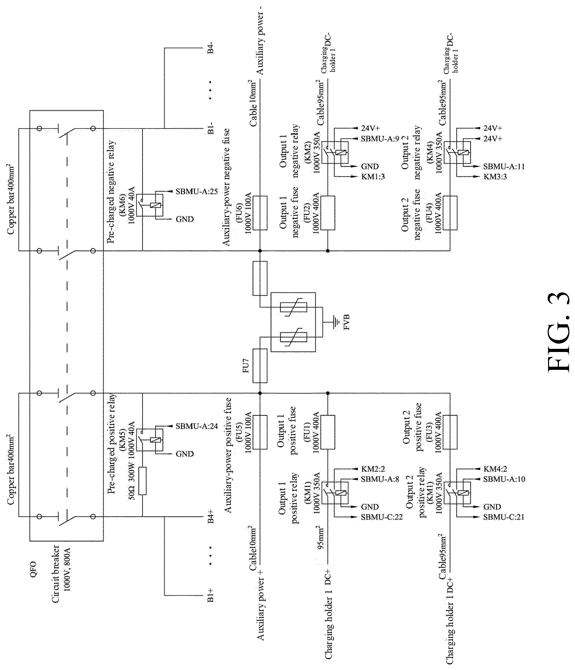

Referring to FIG. 3, in some embodiments, the external high-voltage box may be an external multi-cluster high-voltage box. The combiner cabinet is capable of converging the external multi-cluster high-voltage box and further controlling currents and/or voltages input to the battery pack. The positive output terminal of the external multi-cluster high-voltage box (referring to B1+...B4+ in FIG. 3) is able to be connected to the combiner cabinet through a wiring harness, so that the positive output terminal of the external multi-cluster high-voltage box, a first circuit breaker 741, a positive fuse 71, a positive high-voltage relay 72, and a positive electrode interface 73 are electrically connected in sequence. The positive electrode interface 73 is configured to be electrically connected to the positive electrode of the battery pack. The negative output terminal of the external multi-cluster high-voltage box (referring to B1-...B4- in FIG. 3) is able to be connected to the combiner cabinet through a wiring harness, so that the negative output terminal of the external multi-cluster high-voltage box, a second circuit breaker 743, a negative fuse 81, a negative high-voltage relay 82, and a negative electrode interface 83 are electrically connected in sequence. The negative electrode interface 83 is configured to be electrically connected to the negative electrode of the battery pack mentioned above. Thus the external multi-cluster high-voltage box is able to be electrically connected to the battery pack through the electrical component assembly 14, thereby realizing functions, such as charging and discharging, of the battery pack. In some embodiments, a maximum current of a single-cluster high-voltage box may be less than or equal to 112 A.

For example, the external high-voltage box may be a four-cluster high-voltage box. The four-cluster high-voltage box can be used to charge the battery pack after being converged through the combiner cabinet in the embodiments of the present disclosure. In the embodiments of the present disclosure, the combiner cabinet can be served as a bridge connecting the battery pack to the external environment, and the battery pack can be charged and discharged through the combiner cabinet.

In some embodiments, the positive electrode part 70 and the negative electrode part 80 are arranged along the first direction (i.e., the width direction of the combiner cabinet). In these embodiments, the positive electrode part 70 and the negative electrode part 80 are arranged along the first direction, so as to realize a reasonable layout, a more compact structure, and a smaller area occupied by the combiner cabinet.

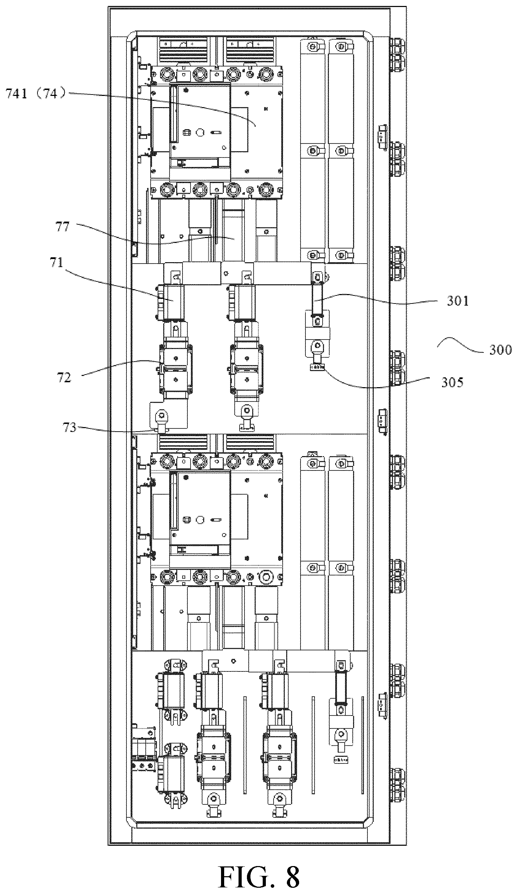

Referring to FIG. 8, the positive electrode part 70 may include the positive fuse 71, the positive high-voltage relay 72, and the positive electrode interface 73. The positive fuse 71, the positive high-voltage relay 72, and the positive electrode interface 73 are electrically connected in sequence. The positive fuse 71 is configured to be electrically connected to the positive output terminal of the external high-voltage box. The positive electrode interface 73 is configured to be electrically connected to the positive electrode of the battery pack. In the embodiments of the present disclosure, the positive electrode part 70 includes the positive fuse 71. When a current of the positive electrode part 70 exceeds a predetermined value, the positive electrode part 70 can be fused in time, thereby protecting circuit safety of the positive electrode part 70.

The electrical component assembly 14 further includes a circuit breaker 74. The circuit breaker 74 includes the first circuit breaker 741. The first circuit breaker 741 is mounted inside the mounting cavity 12. In the embodiments of the present disclosure, the first circuit breaker 741 electrically connected to the positive electrode part 70 is disposed, so that when a safety problem occurs, the first circuit breaker 741 is timely disconnected to protect the circuit safety. In addition, the first circuit breaker 741 and the positive electrode part 70 are arranged along the first direction. The first circuit breaker 741 is closer to the first sidewall 13 relative to the positive electrode part 70 and the negative electrode part 80, so that the structure is compact and the layout is reasonable.

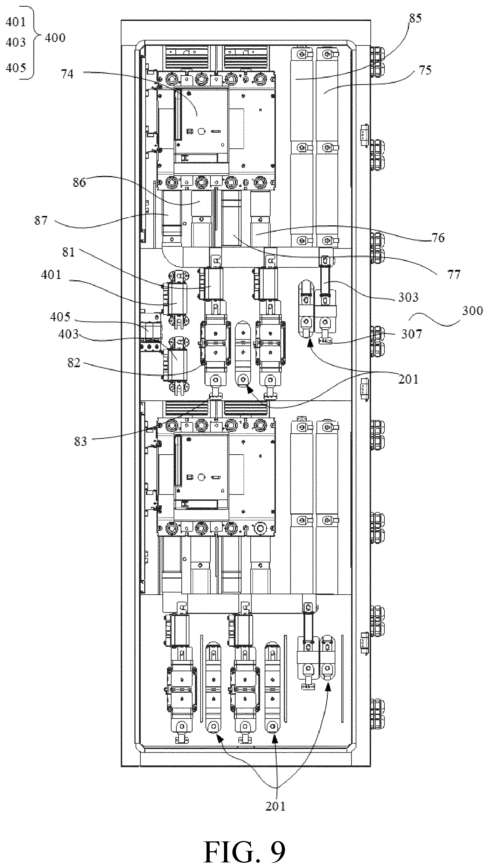

Referring to FIG. 9, the negative electrode part 80 may include the negative fuse 81, the negative high-voltage relay 82, and the negative electrode interface 83 electrically connected in sequence. The negative fuse 81 is configured to be electrically connected to the negative output terminal of the external high-voltage box. The negative electrode interface 83 is configured to be electrically connected to the negative electrode of the battery pack. In the embodiments of the present disclosure, the negative electrode part 80 includes the negative fuse 81. When a current of the negative electrode part 80 exceeds a predetermined value, the negative electrode part 80 can be fused in time, thereby protecting the circuit safety of the negative electrode part 80. Since each of the positive electrode part 70 and the negative electrode part 80 is separately provided with the fuse, the positive electrode part 70 and the negative electrode part 80 can be protected, and the circuit safety can be improved.

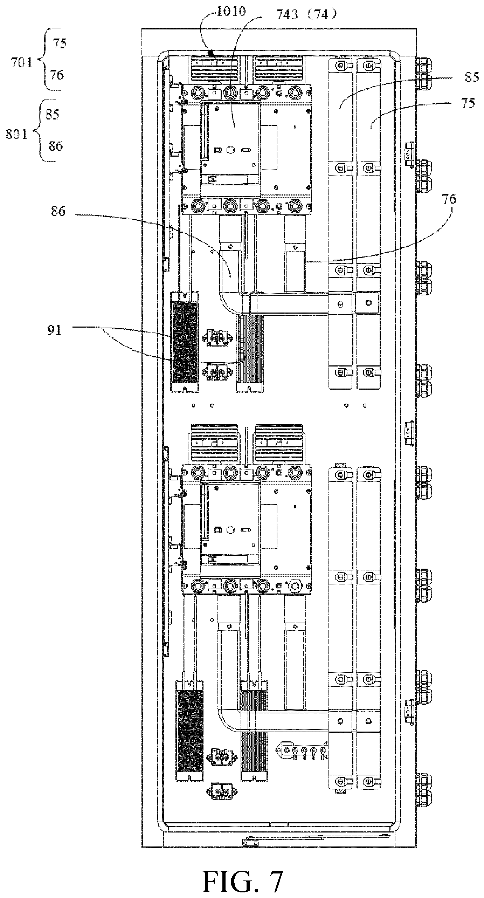

Referring to FIG. 7, the circuit breaker 74 further includes the second circuit breaker 743. The second circuit breaker 743 is mounted inside the mounting cavity 12. The second circuit breaker 743 is electrically connected to the negative electrode part 80. The second circuit breaker 743 and the negative electrode part 80 are arranged along the first direction. In the embodiments of the present disclosure, the second circuit breaker 743 electrically connected to the negative electrode part 80 is disposed, when the safety problem occurs, the second circuit breaker 743 is timely disconnected to protect the circuit safety. In addition, the second circuit breaker 743 may be closer to the first sidewall 13 relative to the positive electrode part 70 and the negative electrode part 80.

Specifically, the first circuit breaker 741, the positive fuse 71, the positive high-voltage relay 72, and the positive electrode interface 73 are electrically connected in sequence. The positive electrode interface 73 is configured to be electrically connected to the positive electrode of the battery pack. The first circuit breaker 741 is configured to be electrically connected to the positive output terminal of the external high-voltage box. The second circuit breaker 743, the negative fuse 81, the negative high-voltage relay 82, and the negative electrode interface 83 are electrically connected in sequence. The negative pole interface 83 is configured to be electrically connected to the negative electrode of the battery pack. The second circuit breaker 743 is configured to be electrically connected to the negative output terminal of the external high-voltage box. In the embodiments of the present disclosure, the first circuit breaker 741 and the second circuit breaker 743 are configured to realize opening and closing of an overall high-voltage return circuit. Specifically, the first circuit breaker 741 is mainly configured to realize opening and closing of the high-voltage return circuit of the positive electrode part. The second circuit breaker 743 is mainly configured to realize opening and closing of the high-voltage return circuit of the negative electrode part. The opening and closing of the overall high-voltage return circuit can be realized through cooperation of the first circuit breaker 741 and the second circuit breaker 743.

If only the positive electrode part 70 is provided with the first circuit breaker 741, even if the first circuit breaker 741 is disconnected, in some cases, for example, the combiner cabinet is connected reversely or suffers from unexpected circumstances such as lightning strikes, the negative electrode of the battery pack has a high voltage, and the battery pack may be damaged by the high voltage through a passage on the negative electrode side, resulting in potential safety hazards. If only the negative electrode part 80 is provided with the second circuit breaker 743, even if the second circuit breaker 743 is disconnected, the positive electrode part 70 may be in a high-voltage state, resulting in the safety hazards. In the embodiments of the present disclosure, in the positive electrode part 70, the first circuit breaker 741 is connected to the positive output terminal of the external high-voltage box. In the negative electrode part 80, the second circuit breaker 743 is connected to the negative output terminal of the external high-voltage box. Thus the circuits can be protected by the first circuit breaker 741 and the second circuit breaker 743.

In the embodiments of the present disclosure, each of the positive electrode part 70 and the negative electrode part 80 is provided with the fuse. Both the positive electrode part 70 and the negative electrode part 80 are connected to the circuit breaker 74. The positive electrode part 70 and the negative electrode part 80 are protected by both the fuse and the circuit breaker 74, so that the circuit safety is high. The electrical component assembly 14 further includes a first copper bar 701 and a second copper bar 801. The positive electrode part 70 is electrically connected to the positive output terminal of the external high-voltage box through the first copper bar 701. The negative electrode part 80 is electrically connected to the negative output terminal of the external high-voltage box through the second copper bar 801, thereby generating less heat.

The first copper bar 701 may be mounted on the first layer plate 21. The second copper bar 801 may be mounted on the first layer plate 21. The second copper bar 801 and the first copper bar 701 are arranged at intervals. Thus the first copper bar 701 can be conveniently connected to the positive electrode part 70 and the positive output terminal of the external high-voltage box, respectively, and the second copper bar 801 can be conveniently connected to the negative electrode part 80 and the negative output terminal of the external high-voltage box, respectively, thereby the structure is compact.

In some embodiments, the first copper bar 701 may include a cluster high-voltage positive wiring copper bar 75 and a cluster high-voltage positive electrode-to-circuit breaker copper bar 76. The second copper bar 801 may include a cluster high-voltage negative electrode wiring copper bar 85 and a cluster high-voltage negative electrode-to-circuit breaker copper bar 86. The positive output terminal of the external high-voltage box may be connected to the cluster high-voltage positive wiring copper bar 75 through a wire harness, and the cluster high-voltage positive wiring copper bar 75 is connected to the first circuit breaker 741 through the cluster high-voltage positive electrode-to-the circuit breaker copper bar 76. The first circuit breaker 741 is electrically connected to the positive fuse 71 through a circuit breaker-to-output positive copper bar 77. The positive fuse 71 is connected to the positive high-voltage relay 72 through a copper bar. The positive high-voltage relay 72 is connected to a positive output wire harness through an output wire harness copper bar. The positive output wire harness is connected to the positive electrode interface 73. The circuit breaker-to-output positive copper bar 77 may be mounted on a side of the second layer board 23 facing the cabinet door 11.

The negative output terminal of the external high-voltage box is connected to the cluster high-voltage negative wiring copper bar 85 through a wire harness, and the cluster high-voltage negative wiring copper bar 85 is connected to the second circuit breaker 743 through the cluster high-voltage negative electrode-to-circuit breaker copper bar 86. The second circuit breaker 743 is electrically connected to the negative fuse 81 through a circuit breaker-to-output negative copper bar 87. The negative fuse 81 is connected to the negative high-voltage relay 82 through a copper bar. The negative high-voltage relay 82 is connected to a negative output wire harness through a copper bar. The negative output wire harness is connected to the negative electrode interface 83. The circuit breaker-to-output negative copper bar 87 may be mounted on a side of the third layer plate 25 facing the cabinet door 11.

Referring to FIG. 7, in order to protect the fuses and the relays, a pre-charge resistor 91 may further be provided. The pre-charge resistor 91 can protect an excessive charge current of the fuses and the relays at the instant of direct power-on, so as to prevent the fuses and switching devices, such as the relay 82, from being damaged due to the excessive instantaneous current. The pre-charge resistor 91 is mounted on a side of the first layer plate 21 facing the second layer plate 23.

In some embodiments, the circuit breaker 74 (including the first circuit breaker 741 and the second circuit breaker 743) may be mounted on a side of the first layer plate 21 close to the cabinet door 11. The positive electrode part 70 may be mounted on the side of the second layer plate 23 close to the cabinet door 11. The negative electrode part 80 may be mounted on the side of the third layer board 25 close to the cabinet door 11. In these embodiments, the plurality of layer plates 20 are provided. The circuit breaker 74, the positive electrode part 70, and the negative electrode part 80 are respectively mounted on different layer plates 20, so that the circuit breaker 74, the positive electrode part 70, and the negative electrode part 80 are arranged along the first direction.

In some embodiments, except for the positive electrode part 70 and the negative electrode part 80, the electrical component assembly 14 further includes a control part 100. The control part 100 is mounted inside the mounting cavity 12. The control part 100 is configured to be electrically connected to the positive electrode part 70, the negative electrode part 80, and the battery pack. The control part 100 is further configured to be electrically connected to the communication signal terminal of the external high-voltage box, so as to detect states of the external high-voltage box and the battery pack.

In existing art, energy storage systems generally include combiner cabinets in a form of independent equipment cabinets. The energy storage systems achieve convergence of external high-voltage boxes through the combiner cabinets. The combiner cabinets have a relatively single function. In order to achieve control of input or output currents/voltages, it is necessary to use another electric control cabinet existed in the form of independent equipment cabinets, and thus the combiner cabinets occupy a large space. In the embodiments of the present disclosure, the electrical component assembly 14 mounted inside the cabinet body includes the positive electrode part, the negative electrode part, and the control part. The external high-voltage box is able to be connected to the positive electrode and the negative electrode of the battery pack through the positive electrode part and the negative electrode part, respectively. The external high-voltage box realizes convergence through the positive electrode part and the negative electrode part. The combiner cabinet is connected to the communication signal terminal of the external high-voltage box through the control part, so as to detect the states of the external high-voltage box and the battery pack, thereby enriching the functions of the combiner cabinet. Moreover, compared to the solution in the existing art in which the control part is located inside a separate cabinet body, and the positive electrode part and the negative electrode part are located inside another separate cabinet body, in the embodiments of the present disclosure, the control part, the positive electrode, and the negative electrode are all located inside a same cabinet body, and the control part and the positive electrode part are arranged along the length direction or the width direction of the combiner cabinet. Thus the use of one additional cabinet body is reduced, and a structure between the control part and the positive electrode part and the negative electrode part is more compact.

In the embodiments of the present disclosure, the control part 100 is disposed inside the cabinet body 10, and the control part 100 is configured to be electrically connected to the communication signal terminal of the external high-voltage box, so that the control part 100 has functions as follows. In a first aspect, the communication signal terminal of the external high-voltage box can supply power to the control part 100. In a second aspect, the communication signal terminal of the external high-voltage box can detect the states of the external high-voltage box and the battery pack in real-time. If there is a fault in the external high-voltage box, the external high-voltage box can feed back to the combiner cabinet through the communication signal terminal, and the combiner cabinet can feed back to a driving console. In a third aspect, the control part 100 can detect and feed back the states of the battery pack in real-time through the communication signal terminal, and the states of the battery pack include an operating voltage, an operating current, a remaining power, a remaining battery life, etc., of a battery system. Compared to the solution in the existing art where the energy storage systems generally include electric control cabinets and combiner cabinets each in the form of the independent equipment cabinet, the combiner cabinet provided by the embodiments of the present disclosure has richer functions, a compact structure, and a smaller occupying space.

It should be noted that the cluster high-voltage box outside the combiner cabinet may include the positive output terminal, the negative output terminal, and the communication signal terminal. A sidewall of the cabinet body 10 may be provided with a wire inlet 90. The wire inlet 90 is configured to be connected to an external wiring harness. The wire inlet 90 includes a positive electrode wire inlet, a negative electrode wire inlet, and a communication wire inlet. A high-voltage wiring harness connected to the external high-voltage box can be mounted in the wire inlet 90 through a cable gland. The wiring harness passing through can be locked by the cable gland to improve a protection level of the cabinet body 10, thereby preventing foreign matter and moisture in the external environment from entering the combiner cabinet, resulting in faults of the combiner cabinet and short circuits.

The communication signal terminal enters the cabinet body 10 through the communication wire inlet provided on the sidewall of the cabinet body 10, and the communication signal terminal is connected to a battery management system (BMS) control member 31. The positive output terminal of the external high-voltage box enters the cabinet body 10 through the positive wire inlet provided on the sidewall of the cabinet body 10. The positive output terminal is connected to the first copper bar 701 and the first circuit breaker 741. The negative output terminal enters the cabinet body 10 through a negative wire inlet provided on the sidewall of the cabinet body 10. The negative output terminal is connected to the second copper bar 801 and the second circuit breaker 743.

In some embodiments, the control part 100 and the positive electrode part 70 may be arranged along a length direction of the combiner cabinet. The positive electrode part 70 and the negative electrode part 80 may be arranged along the width direction of the combiner cabinet, i.e., along the first direction, so that the structure is more compact and the space occupied by the combiner cabinet is smaller.

In some embodiments, the control part 100 includes a first sub-control part 101 and a second sub-control part 103. The first sub-control part 101, the positive electrode part 70, and the second sub-control part 103 are arranged in sequence along the length direction of the combiner cabinet. In these embodiments, the control parts 100 are provided in two groups. The first sub-control part 101 and the second sub-control part 103 are located on two sides of the positive electrode part 70 and the negative electrode part 80, respectively. The first sub-control part 101 may be mounted on the second sidewall 15, and the second sub-control part 103 may be mounted on the third sidewall 17.

In some embodiments, the second sub-control part 103 of the control part 100 includes the BMS control member 31. The BMS control member 31 is configured to be electrically connected to the communication signal terminal of the external high-voltage box. The BMS control member 31 is electrically connected to the positive electrode part 70 and the negative electrode part 80, respectively.

In some embodiments, the electrical component assembly 14 further includes an adjustment indicating part 200. The adjustment indicating part 200 is mounted on a side of the cabinet door 11 away from the mounting cavity 12. The adjustment indicating part 200 is electrically connected to the BMS control member 31, and is configured to adjust and indicate operating conditions of the battery pack.

In the embodiments of the present disclosure, the combiner cabinet may include a plurality of electrical component assemblies 14. A specific structure of each of the electrical component assemblies 14 has been described above. Each of the electrical component assemblies 14 includes the positive electrode part 70, the negative electrode part 80, the control part 100, etc., which are mentioned above. Detailed contents will not be repeatedly described herein.

Each of the electrical component assemblies 14 may be configured to be electrically connected to the external multi-cluster high-voltage box and a corresponding one of the battery packs. The plurality of electrical component assemblies 14 are arranged from top to bottom along the height direction of the combiner cabinet. In this manner, one combiner cabinet of the embodiments of the present disclosure can be used to meet the convergence of a plurality of battery packs simultaneously. Thus the combiner cabinet occupies a small area, is convenient to use, and has lower costs.

In the embodiments of the present disclosure, each of the electrical component assemblies 14 is configured to be electrically connected to the external multi-cluster high-voltage box and is configured to be electrically connected to the corresponding one of the battery packs, thereby realizing the convergence of the external multi-cluster high-voltage box through the electrical component assemblies 14. After the external multi-cluster high-voltage box is converged through one of the electrical component assemblies 14, the external multi-cluster high-voltage box charges and discharges the corresponding one of the battery packs. In the cabinet body 10, the plurality of electrical component assemblies 14 are provided and configured to be electrically connected to the plurality of battery packs, so that convergence requirements of the plurality of battery packs can be satisfied, and a situation in which the combiner cabinet in the existing art is difficult to satisfy the collection requirements of the plurality of battery packs is improved.

In some embodiments, for ease of description, the plurality of battery packs at least include a first battery pack and a second battery pack. The plurality of electrical component assemblies 14 at least include a first electrical component assembly 14 and a second electrical component assembly 14. The mounting cavity 12 of the cabinet body 10 includes a first mounting cavity 121 and a second mounting cavity 123 arranged from top to bottom along the height direction of the combiner cabinet.

The first electrical component assembly 14 is mounted inside the first mounting cavity 121. The first electrical component assembly 14 is electrically connected to the external high-voltage box. The first electrical component assembly 14 is electrically connected to the first battery pack. The external high-voltage box may have a plurality of clusters. The second electrical component assembly 14 is mounted inside the second mounting cavity 123. The second electrical component assembly 14 is electrically connected to the external high-voltage box. The second electrical component assembly 14 is electrically connected to the second battery pack. The external high-voltage box may have a plurality of clusters.

In some embodiments, a single battery pack may be connected to four clusters of the external high-voltage box, and the external high-voltage boxes have eight clusters. The first electrical component assembly 14 may converge four clusters of the external high-voltage box and is configured to charge the first battery pack. The second electrical component assembly 14 may converge another four clusters of the external high-voltage box and is configured to charge the second battery pack. In the embodiments of the present disclosure, one combiner cabinet is used to simultaneously meet high-voltage convergence and low-voltage control of two or more battery packs. Thus the combiner cabinet occupies a small area, is convenient to use, and have low costs.

Referring to FIG. 4, the first mounting cavity 121 may include a first mounting space 1211 and a second mounting space 1213 arranged along the height direction of the combiner cabinet. Specifically, in the first mounting cavity 121and along the width direction of the combiner cabinet, the projection of at least the part of the first layer plate 21 on the cabinet door 11 (or the first sidewall 13) is above the projection of the second layer plate 23 on the cabinet door 11 (or the first sidewall 13). Along the width direction of the combiner cabinet, the projection of at least a part of the first layer plate 21 on the cabinet door 11 is located above the projection of the third layer plate 25 on the cabinet door 11. As such, at least a part of the first layer 21 can be directly opposed to the cabinet door 11 and form the first mounting space 1211.

A part of the first layer plate 21 forms the second mounting space 1213 with the second layer plate 23 and the third layer plate 25. The second mounting space 1213 may include a first sub-mounting cavity, a second sub-mounting cavity, and a third sub-mounting cavity. A part of the first layer plate 21 defines the second sub-mounting cavity with the second layer plate 23. The second layer plate 23 defines the second sub-mounting cavity with the third layer plate 25. The third layer plate 25 defines the third sub-mounting cavity with the cabinet door 11. At least a part of the first circuit breaker 741 is mounted inside the first mounting space 1211. At least a part of the second circuit breaker 743 is mounted inside the first mounting space 1211.

A specific implementation method forming the first mounting cavity 121 is described as follows. The two opposite sides of the first layer plate 21 can be respectively connected to the second sidewall 15 and the third sidewall 17, for example, by welding, screwing, etc. Two opposite sides of the second layer plate 23 can be respectively connected to the second sidewall 15 and the third sidewall 17, for example, by welding, screwing, etc. Two opposite sides of the third layer plate 25 can be respectively connected to the second sidewall 15 and the third sidewall 17, for example, by welding, screwing, etc. In this manner, the first layer 21, the second layer 23, and the third layer 25 are mounted on the cabinet body 10, so that the structure is more compact, and the volume and the space occupied by the cabinet body 10 are reduced.

In the second mounting cavity 123, specific positional relationships of the first layer plate 21, the second layer plate 23, and the third layer plate 25 may be referred to specific positional relationships thereof in the first mounting cavity 121.

In some embodiments, each of the electrical component assemblies 14 includes the positive electrode part 70 and the negative electrode part 80 mentioned above. The positive electrode part 70 is configured to be electrically connected to the positive output terminal of the external high-voltage box and the positive electrode of the corresponding one of the battery packs. The negative electrode part 80 is configured to be electrically connected to the negative output terminal of the external high-voltage box and the negative electrode of the corresponding one of the battery packs. In this manner, one electrical component assembly 14 can correspond to one battery pack, the plurality of electrical component assemblies 14 can correspond to the plurality of battery packs, and the electrical component assembly 14 and the battery pack can be in a one-to-one correspondence relationship.

Referring to FIG. 3, since the combiner cabinet can be connected to the multi-cluster high-voltage box, overcurrent capability of one positive electrode interface 73 cooperating with one negative electrode interface 83 cannot meet use requirements. As such, a plurality of positive electrode parts 70 and a plurality of negative electrode parts 80 are provided. The positive electrode parts 70 are arranged in a one-to-one correspondence to the negative electrode parts 80. That is, each of the electrical component assemblies 14 includes the plurality of positive electrode parts 70 and the plurality of negative electrode parts 80. Thus each of the electrical component assemblies 14 includes a plurality of positive electrode interfaces 73 (referring to a charging base 1DC+ in FIG. 3 and a charging base 2DC+ in FIG. 3) and a plurality of negative electrode interfaces 83 (referring to a charging base 1DC- in FIG. 3 and a charging base 2DC- in FIG. 3). The positive electrode interfaces 73 cooperate in a one-to-one correspondence with the negative electrode interfaces 83. Each of the positive electrode interfaces 73 cooperates with a corresponding one of the negative electrode interfaces 83 to form a charging/discharging interface. The plurality of positive electrode parts 70 are electrically connected to the positive electrode of the corresponding one of the battery packs, respectively. The plurality of negative electrode parts 80 are electrically connected to the negative electrode of the corresponding one of the battery packs, respectively. Each of the electrical component assemblies 14 is provided with the plurality of positive electrode parts 70 and the plurality of negative electrode parts 80 are provided, so as to supply a larger current to the corresponding one of the battery packs.

In some embodiments, since a maximum current input from a four-cluster high-voltage box is about 448 A, and an overcurrent capacity of a single charge/discharge interface is about 250 A. In order to meet overcurrent requirements, two positive electrode parts 70 and two negative electrode parts 80 are provided to share the current.

In some embodiments, for convenience of users, two battery packs can be distinguished, and thus each of the electrical component assemblies 14 includes the control part 100. The control part 100 is configured to be electrically connected to the electrical component assembly 14 and the battery pack. The control part 100 is further configured to be electrically connected to the communication signal terminal of the external high-voltage box, so as to detect the states of the external high-voltage box and the battery pack. As such, one battery pack is controlled by one control part 100, and the control is accurate.

In some embodiments, the control part 100 may include a first control part and a second control part. The first control part is mounted inside the first mounting cavity 121. The second control part is mounted inside the second mounting cavity 123. The first control part is electrically connected to the first battery pack and the first electrical component assembly 14, respectively, so as to detect the states of the external high-voltage box and the first battery pack. The second control part is electrically connected to the second battery pack and the second electrical component assembly 14, respectively, so as to detect the states of the external high-voltage box and the second battery pack.

The first control part and the second control part individually control the first battery pack and the second battery pack, respectively, so that the control parts 100 of the two battery packs are independent of each other and do not interfere with each other, thereby reducing a failure rate and improving the control accuracy.

In some embodiments, in each of the electrical component assemblies 14, the control part 100 includes two parts including the first sub-control part 101 and the second sub-control part 103. The first sub-control part 101 and the second sub-control part 103 are electrically connected. Along the length direction of the cabinet body 10, the first sub-control part and the second sub-control part are located on two sides of the cabinet body 10. Specifically, the first sub-control part and the second sub-control part may be mounted on the second sidewall 15 and the third sidewall 17, respectively.

Specifically, the second sub-control part 103 is mounted on a side of the third sidewall 17 of the cabinet body 10 facing the second sidewall 15 of the cabinet body 10. The first sub-control part 101 is mounted on a side of the second sidewall 15 of the cabinet body 10 facing the third sidewall 17 of the cabinet body 10.

In some embodiments, along the width direction of the combiner cabinet, a projection of the first sub-control part 101 on the first sidewall 13 is located above a projection of the second layer plate 23 on the first sidewall 13.

In some embodiments, along the width direction of the combiner cabinet, a projection of the second sub-control part 103 on the first sidewall 13 is located above the projection of the second layer plate 23 on the cabinet door 11.

In some embodiments, along the width direction of the combiner cabinet, the projection of the first sub-control part 101 on the first sidewall 13 is located above the projection of the second layer plate 23 on the first sidewall 13. Moreover, along the width direction of the combiner cabinet, the projection of the second sub-control part 103 on the first sidewall 13 is located above the projection of the second layer plate 23 on the cabinet door 11.

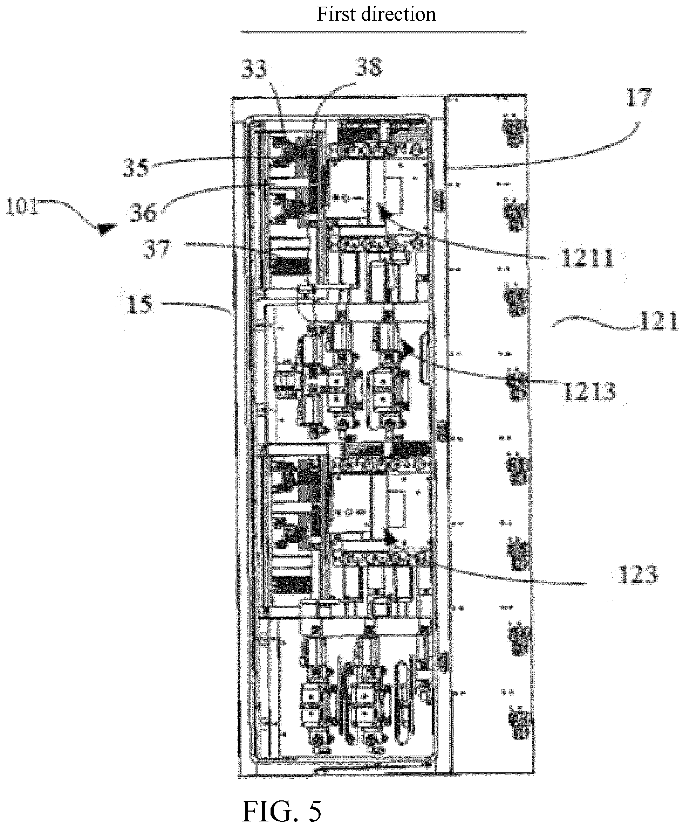

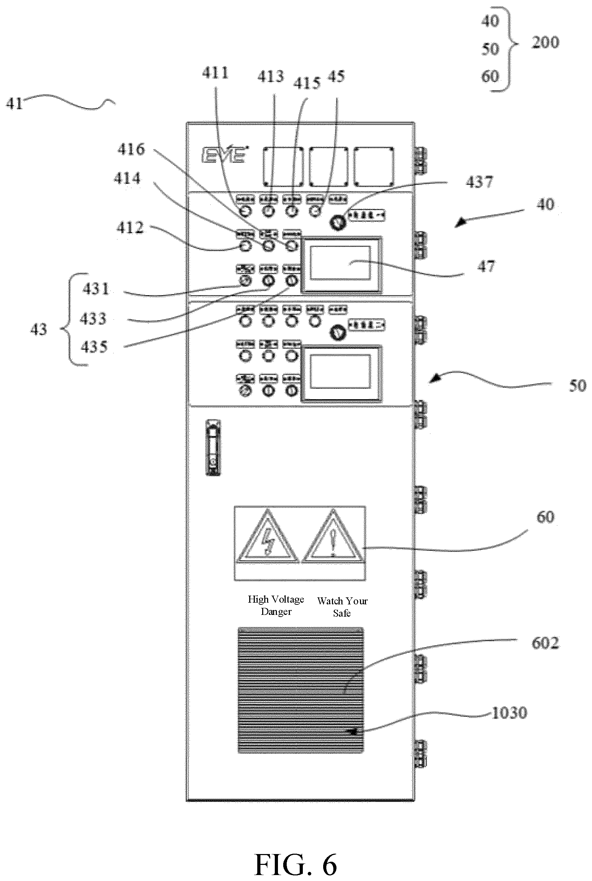

Referring to FIG. 5 and FIG. 6, the first sub-control part 101 is configured to control an indicator lamp module 41 and a switch module 43. The first sub-control part 101 may include a signal relay 33, an air switch 35, a line groove 36, a connecting terminal 37, an AC/DC power supply 38, etc. The second sub-control part 103 may include the BMS control member 31. The communication signal terminal can supply power to the control part 100 through the AC/DC power supply of the combiner cabinet.

Specifically, in the first mounting space 1211, a first bracket plate may be mounted on the side of the second sidewall 15 of the cabinet body 10 facing the third sidewall 17 of the cabinet body 10. The first sub-control part 101 may be mounted on the first bracket plate. The first sub-control part 101 is mounted on the second sidewall 15 through the first bracket plate. A second bracket plate may be mounted on the side of the third sidewall 17 of the cabinet body 10 facing the second sidewall 15 of the cabinet body 10. The second sub-control part 103 is mounted on the second bracket plate. The second sub-control part 103 is mounted on the third sidewall 17 through the second bracket plate.

In some specific embodiments, the BMS control member 31 is mounted on the second bracket plate and is configured to manage the battery pack. The BMS control member 31 is mounted on the third sidewall 17 through the second bracket plate. The communication signal terminal of the external high-voltage box may enter the combiner cabinet through the wire inlet and is connected to the BMS control member 31. There are a plurality of BMS control members 31. Each of the BMS control members 31 is configured to control one of battery systems. In some embodiments, the battery systems are configured into two groups, and the BMS control members 31 are configured as two groups, so that the two groups of battery systems can be managed separately.

Specifically, a guide rail may be mounted on the first bracket plate. The connecting terminal 37, the signal relay 33, and the air switch 35 are all mounted on the guide rail, and are mounted in a snap-on manner with the guide rail. The AC/DC power supply 38 is mounted on the first bracket plate.

In some specific embodiments, the indicator lamp module 41 and the switch module 43 may be mounted on the cabinet door 11, and may be located on the side of the cabinet door 11 away from the mounting cavity 12, i.e., located outside of the cabinet door 11. The indicator lamp module 41 and the switch module 43 are connected to the connecting terminal 37 through a wiring harness. The connecting terminal 37 is connected to the signal relay 33 and the air switch 35 through a wiring harness. The wiring harness can converge at the line groove 36 and be connected to the BMS control component 31, and the BMS control component 31 outputs a signal to the driving console through the wiring harness.

In some embodiments, each first electrical component assembly 14 further includes an auxiliary-power part 300. The auxiliary-power part 300 can be mounted on the second layer plate 23 and the third layer plate 25. The auxiliary-power part 300 includes an auxiliary-power positive fuse 301, an auxiliary-power negative fuse 303, an auxiliary-power positive interface 305, and an auxiliary-power negative interface 307. The auxiliary-power positive fuse 301 and the auxiliary-power positive interface 305 can be mounted on the second layer plate 23. The auxiliary-power negative interface 307 and the auxiliary-power negative interface 307 can be mounted on the third layer plate 25. The first circuit breaker 741, the auxiliary-power positive fuse 301, and the auxiliary-power positive interface 305 are electrically connected in sequence. The auxiliary-power positive interface 305 is configured to be electrically connected to a positive electrode of an auxiliary power cabinet.

The second circuit breaker 743, the auxiliary-power negative fuse 303, and the auxiliary-power negative interface 307 are electrically connected in sequence. The auxiliary-power negative interface 307 is configured to be electrically connected to a negative electrode of the auxiliary power cabinet.

The auxiliary-power positive interface 305 and the auxiliary-power negative interface 307 are configured to be connected to the auxiliary power cabinet. The auxiliary -power positive interface 305 and the auxiliary-power negative interface 307 can further charge the auxiliary power cabinet. In addition, the auxiliary-power positive fuse 301 and the auxiliary-power negative fuse 303 are provided to meet requirements of separately arranging the fuses for each circuit.

Specifically, the positive output terminal of the external high-voltage box is connected to the cluster high-voltage positive wiring copper bar through the wiring harness, and the positive output terminal is connected to the first circuit breaker 741 through the cluster high-voltage positive electrode-to-the circuit breaker copper bar 76. The first circuit breaker 741 is connected to the auxiliary-power positive fuse 301. The auxiliary-power positive fuse 301 is connected to an auxiliary-power positive output wire harness through an auxiliary-power positive copper bar. The auxiliary-power positive output wire harness is connected to the auxiliary-power positive interface 305.

The negative output terminal of the external high-voltage box is connected to the cluster high-voltage negative wiring copper bar 85 through the wiring harness, and the negative output terminal is connected to the second circuit breaker 743 through the cluster high-voltage negative electrode-to-circuit breaker copper bar 86. The second circuit breaker 743 is connected to the auxiliary-power negative fuse 303. The auxiliary-power negative fuse 303 is connected to an auxiliary-power negative output wiring harness through an auxiliary-power negative copper bar. The auxiliary-power negative output wiring harness is connected to the auxiliary-power negative interface 307.

In some embodiments, each of the first electrical component assemblies 14 further includes a surge protection part 400. The surge protection part 400 may be mounted on the second layer plate 23. The surge protection part 400 includes a first surge fuse 401, a surge protector 405, and a second surge fuse 403. The first circuit breaker 741, the first surge fuse 401, the surge protector 405, the second surge fuse 403, and the second circuit breaker 743 are electrically connected in sequence to form a surge protection return circuit. The surge protection return circuit is provided to be configured to prevent the equipment from being damaged by the lightning strikes.

Specifically, the first circuit breaker 741 is electrically connected to the circuit breaker-to-output positive copper bar 77. The second circuit breaker 743 is electrically connected to the circuit breaker-to-output negative copper bar 87. One end of the first surge fuse 401 is connected to the circuit breaker-to-output positive copper bar 77 through a wire harness, so that the first surge fuse 401 is electrically connected to the first circuit breaker 741. Another end of the first surge fuse 401 is connected to the surge protector 405. One end of the surge protector 405 is connected in series to the second surge fuse 403 through a wire harness, and the second surge fuse 403 is connected to the circuit breaker-to-output negative copper bar 87 through a wire harness, so that the second surge fuse 403 is electrically connected to the second circuit breaker 743. The circuit breaker-to-output positive copper bar 77 may be mounted on a side of the second layer plate 23 facing the cabinet door 11. The circuit breaker-to-output negative copper bar 87 may be mounted on a side of the third layer board 25 facing the cabinet door 11.

In some embodiments, the guide rail and insulating posts may be mounted on the second layer plate 23. The guide rail is configured to fix the surge protector 405, thereby improving installation efficiency and installation stability. The first surge fuse 401 and the second surge fuse 403 are fixed on the insulating columns of the second layer plate 23.

Referring to FIG. 8, in some embodiments, the layer plates 20 may be provided with access panels. The access panels may be waist-shaped access panels 201. When the wire harness is loose, the wire harness can be directly reinforced without disassembling the layer plate 20 closer to the cabinet door 11, so as to facilitate reinforcement and maintenance.

In some embodiments, the layer plate 20 may be covered with a polycarbonate (PC) film to improve insulation performance. Specifically, a side of the layer plate 20 facing the cabinet door 11 may be covered with the PC film.

In some embodiments, an insulating plate 603 may be mounted on a side of the layer plate 20 away from the cabinet door 11. The insulating plate 603 is configured to increase an electrical clearance between the copper bars, thereby improving the insulating performance. The insulating plate 603 may be an acrylic insulating plate.

In some embodiments, each of the first electrical component assemblies 14 further includes the adjustment indicating part 200. The adjustment indicating part 200 is mounted on the side of the cabinet door 11 away from the mounting cavity 12. The adjustment indicating part 200 is configured to adjust and indicate the operating conditions of the corresponding one of the battery packs.

The adjustment indicating part 200 may include a first operation module 40, a second operation module 50, and a warning module 60. The first operation module 40, the second operation module 50, and the warning module 60 are arranged in sequence from top to bottom along the height direction of the cabinet body 10.

The first operation module 40 is configured to display and control operating conditions of the first battery pack. The second operation module 50 is configured to display and control operating conditions of the second battery pack.

In the embodiments of the present disclosure, since the first battery pack and the second battery pack are arranged in groups by the control part 100, when the fault occurs, the control part can intuitively identify which one of the battery packs the fault comes from. Moreover, the input and output of the battery packs can be timely cut off to prevent greater losses. Thus the states of two groups of the battery packs of the external high-voltage box can be monitored, and overall communication of the two battery systems can be integrated and output to the driving console.

Next, the first operation module 40 will be described. The first operation module 40 includes the indicator lamp module 41, the switch module 43, a buzzer 45, and a display module 47. States of the first battery pack are timely fed back and controlled by the first operation module 40. The indicator lamp module 41 and the switch module 43 are electrically connected to the control part 100, respectively.

The display module 47 is disposed on one side of the cabinet door 11 connected to the cabinet body 10. The indicator lamp module 41 is disposed on another side of the cabinet door 11 connected to the cabinet body 10, i.e., the indicator lamp module 41 is disposed on one side of the display module 47. The indicator lamp module 41 and the display module 47 are arranged at intervals.

The indicator lamp module 41 may include an operation indicator lamp 411, a fault indicator lamp 413, a closing indicator lamp 415, an over-high temperature indicator lamp 412, a voltage 24V indicator lamp 414, and a SOC low indicator lamp 416. The indicator lamp module 41 is disposed in two parallel rows. A first row includes the operation indicator lamp 411, the fault indicator lamp 413, and the closing indicator lamp 415. A second row includes the over-high temperature indicator lamp 412, the power supply 24V indicator lamp 414, and the SOC low indicator lamp 416. The indicator lamp module 41 is disposed in the two parallel rows, so that a structure between the first row of the indicator lamp module 41 and the second row of the indicator lamp module 41 is relatively compact, which is convenient for the operators to operate.

The switch module 43 may include a remote/local control switch 431, a start/stop control switch 433, and a silencing control switch 435. The remote control/local control switch 431, the start/stop control switch 433, and the silencing control switch 435 are arranged in one row, and are arranged in parallel with the indicator lamp module 41. Thus the indicator lamp module 41 and the switch module 43 are arranged in parallel. The first row of the indicator lamp module 41, the second row of the indicator lamp module 41, and the switch module 43 are sequentially arranged from top to bottom. The structure between the switch module 43 and the indicator lamp module 41 are relatively compact. A position of the first row of the indicator lamp module 41 is higher than the display module 47. A mounting space is provided between a side of the first row of the indicator lamp module 41 facing the display module 47 and the display module 47. The buzzer 45 and an emergency stop switch 437 are mounted inside the mounting space, so that the buzzer 45 and the emergency stop switch 437 are convenient for the operators to operate and are not prone to be touched by accident. The buzzer 45 is arranged close to the first row of the indicator lamp module 41. The buzzer 45 is located above the display module 47. The emergency stop switch 437 is located between the buzzer 45 and the display module 47.

The display module 47 is mounted on the cabinet door 11 and is configured to display relevant parameters and the operating conditions. Two display modules 47 of the first battery pack and the second battery pack are arranged separately, and the two display modules 47 of the two battery packs are independent of each other and do not interfere with each other. The states of batteries of the two battery systems can be monitored by the two display modules 47 of the cabinet door 11. In some embodiments, both the two display modules 47 may be touch display screens.

A structure and effects of the second operation module 50 can be referred to the first operation module 40. The second operation module 50 is configured to display and control the operating conditions of the second battery pack. The first operation module 40 may be separately opened to expose its internal structure. The second operation module 50 may be separately opened to expose its internal structure. Moreover, the cabinet door 11 may be opened as a whole. When a cabinet lock is opened, the cabinet door 11 may be opened as a whole from a handle.

The warning module 60 includes an identification member and the cabinet lock. A ventilation member is arranged close to the bottom of the cabinet door 11. The identification member is arranged between the ventilation member, the cabinet lock, and the second operation module. The cabinet lock is configured to lock the cabinet door 11 and the cabinet body 10. The identification member can be a high-voltage warning identification.

In the embodiments of the present disclosure, each of the first battery pack and the second battery pack includes a low-voltage indicator lamp and a control switch arranged separately. The low-voltage indicator lamp and the control switch of one of the battery packs and the low-voltage indicator lamp and the control switch of the other one of the battery packs are independent of each other and do not interfere with each other, so that the charging and discharging of the two battery packs can be controlled respectively.

In order to improve heat dissipation effects, in the embodiments of the present disclosure, the combiner cabinet may adopt ventilation to dissipate heat. In some embodiments, the top of the cabinet body 10 is provided with an air outlet 1010, and the cabinet door 11 is provided with an air inlet 1030. The air inlet 1030 and the air outlet 1010 are respectively communicated with the mounting cavity 12. An air outlet assembly is configured to exhaust gases inside the mounting cavity 12 through the air outlet 1010. The electrical component assembly 14 is mounted inside the mounting cavity 12 and configured to converge a plurality of external high-voltage boxes. At least a part of the electrical component assembly 14 is located in an air path between the air inlet 1030 and the air outlet 1010. In these embodiments, air enters the cabinet body 11 through the air inlet 1030. Heat will be generated when the electrical component assembly 14 operates, and the heated air will rise and pass through the electrical component assembly 14. The hot air heated by the electrical component assembly 14 can be sufficiently driven to be exhausted upward, so as to prevent the fault of the electrical component assembly 14 caused by high temperature accumulation. The air inlet 1030 may be provided on a position of the cabinet door 11 close to the bottom wall 19.

In the embodiments of the present disclosure, the air enters through the bottom part of the cabinet body 10 and the air is discharged through the top part of the cabinet body 10, which is beneficial to discharge more hot air and improve the heat dissipation effects. The air takes away the heat generated by the electrical component assembly 14 and is exhausted from the top of the cabinet body 10. The air is exhausted through the top of the cabinet body 10, which is beneficial to exhaust more hot air and improve the heat dissipation effects.

In some embodiments, the combiner cabinet further includes the air outlet assembly. The air outlet assembly is mounted inside the mounting cavity 12. The air outlet assembly is disposed close to the top of the cabinet body 10. The air outlet assembly is configured to exhaust the gases inside the cabinet body 10 through the air outlet 1010. The air outlet assembly and the air outlet 1010 are provided on the top of the cabinet body 10, thereby improving the heat dissipation efficiency.

In some embodiments, the air outlet assembly includes a draught fan, a first filter mesh 601, and a second filter mesh 602. The draught fan is configured to allow the air to enter the cabinet body 10, so as to dissipate heat for internal components of the cabinet body 10. Thus the gases inside the mounting cavity 12 are exported from the air outlet 1010, i.e., to exhaust the air to the external environment. The first filter mesh 601 is mounted on the cabinet body 10 and configured to cover the air outlet 1010. The air outlet assembly includes the second filter mesh 602, and the second filter mesh 602 is mounted on the cabinet door 11 and configured to cover the air inlet 1030. The second filter mesh 602 covers the air inlet 1030, thereby preventing external gases carrying particulate matter from entering the cabinet body 10 and adversely affecting the electrical component assembly 14. The first filter mesh 601 covers the air outlet 1010 to prevent external dust from entering the cabinet body 10 through the air outlet 1010. The draught fan may be a Roots blower, a centrifugal draught fan, an axial flow draught fan, a Yip blower, etc., which is not limited in the present disclosure.

The first filter mesh 601 and the second filter mesh 602 may both be louver filters. The draught fan may include a louver draught fan. The louver draught fan is connected to the BMS control member 31 through a wiring harness. The opening and closing of the louver draught fan are controlled by a program in the BMS control member 31, so as to realize ventilation and heat dissipation inside the combiner cabinet.

The air inlet 1030 may use a 323mm * 323mm louver filter mesh group. The air outlet 1010 may use two 204mm * 204mm louver filter groups with two 24V DC axial draught fans. The protection level can reach IP55, and an air flow rate can reach 98 m³/h.

In some embodiments, the layer plate 20 is configured to mount the electrical component assembly 14 on a side facing the air inlet 1030. Along the first direction, a projection of at least a part of the electrical component assembly 14 on the cabinet door 11 is located above the air inlet 1030, and/or the projection of at least the part of the electrical component assembly 14 on the cabinet door 11 is located within the air inlet 1030.

As such, the air entering from the air inlet 1030 can pass through the electrical component assembly 14 on the layer plate 20 to better dissipate heat.

In some embodiments, each of the plurality of layer plates 20 may be provided with through holes penetrating along the first direction. In these embodiments, all of the layer plates 20 are provided with the through holes penetrating along the first direction. The through holes may be configured to mount the electrical component assembly 14 and can be configured for maintenance. After the external air enters between the third layers 25 and the cabinet door 11 through the air inlet 1030, the external air can enter between the second layer plate 23 and the third layer plate 25 through the through holes, and can enter between the first layer plate 21 and the second layer plate 23 through the through holes, which is helpful for heat dissipation.

In the embodiments of the present disclosure, after the external gases enter the cabinet body 10, the external gases can be divided into at least two paths. The external gases in one of the paths enter between the first layer plate 21 and the second layer plate 23, so as to take away the heat of a part of the first electrical component assembly 14 mounted on the first layer plate 21. The external gases in the other one of the paths enter between the second layer plate 23 and the cabinet door 11, so as to take away the heat of a part of the first electrical component assembly 14 mounted on the second layer plate 23. The external gases are exhausted from the air outlet 1010 provided on the top wall 18. That is, the first electrical component 14 dissipates heat through two paths of gases, and the heat dissipation efficiency is high.

In some embodiments, along the first direction, the projection of at least the part of the first layer plate 21 on the cabinet door 11 is located above the projection of the second layer plate 23 on the cabinet door 11. That is, at least a part of the first layer plate 21 may be directly opposite to the cabinet door 11 to form a chamber, and the chamber is located above the second layer plate 23 and the third layer plate 25. In other words, at least a part of the first layer plate 21 and the cabinet door 11 is not provided with the second layer plate 23 and the third layer plate 25 therebetween. As such, the gases entering between the first layer plate 21 and the second layer plate 23 and the gases entering between the second layer plate 23 and the cabinet door 11 can converge at the chamber formed by the cabinet door 11 and the part of the first layer plate 21 directly opposite to the cabinet door 11, so that the gases can be sufficiently led out from the air outlet 1010, which is beneficial to heat dissipation.

The air outlet 1010 is provided on the top wall 18. Along the height direction of the combiner cabinet, a projection of at least a part of the second layer plate 23 on the top wall 18 is located in the air outlet 1010. As such, the air is prone to blow out from the air outlet 1010.

In some embodiments, the cabinet body 10 further includes the insulating plate 603. The insulating plate 603 is mounted on a side of at least one of the layer plates 20 away from the cabinet door 11. As such, the electrical clearance between the electrical component assembly 14, such as copper bars, is increased, thereby improving the heat dissipation, and improving the insulation performance.

In a second aspect, an energy storage system is further provided by the embodiments of the present disclosure. The energy storage system includes the combiner cabinet in any one of the above-mentioned embodiments.

In the combiner cabinet provided by the present disclosure, the electrical component assembly mounted inside the cabinet body includes the positive electrode part, the negative electrode part, and the control part. The external high-voltage box can be connected to the positive electrode and the negative electrode of the battery pack through the positive electrode part and the negative electrode part, respectively. The external high-voltage box realizes convergence through the positive part and the negative electrode part. The combiner cabinet is connected to the communication signal terminal of the external high-voltage box through the control part, so as to detect the states of the external high-voltage box and the battery pack, thereby enriching the functions of the combiner cabinet. Moreover, compared to the solution in the existing art in which the control part is located inside a separate cabinet body, and the positive electrode part and the negative electrode part are located inside another separate cabinet body, in the present disclosure, the control part, the positive electrode, and the negative electrode are all located inside a same cabinet body, and the control part and the positive electrode part are arranged along the length direction or the width direction of the combiner cabinet. Thus the use of one additional cabinet body is reduced, and a structure between the control part and the positive electrode part and the negative electrode part is more compact.

In the energy storage system provided by the present disclosure, the above-mentioned combiner cabinet is used, and the combiner cabinet is connected to the communication signal terminal of the external high-voltage box through the control part, so as to detect the states of the external high-voltage box and the battery pack, thereby enriching the functions of the combiner cabinet. Moreover, compared to the solution in the existing art in which the control part is located inside a separate cabinet body, and the positive electrode part and the negative electrode part are located inside another separate cabinet body, in the present disclosure, the control part, the positive electrode, and the negative electrode are all located inside a same cabinet body, and the control part and the positive electrode part are arranged along the length direction or the width direction of the combiner cabinet. Thus the use of one additional cabinet body is reduced, and a structure between the control part and the positive electrode part and the negative electrode part is more compact.

## Claims

1. A combiner cabinet, **characterized in that** the combiner cabinet comprises:
a cabinet body (10);
a cabinet door (11) connected to the cabinet body (10) and configured to open and close the cabinet body (10); and
an electrical component assembly (14) mounted inside a mounting cavity of the cabinet body (10), wherein the electrical component assembly (14) comprises a positive electrode part (70), a negative electrode part (80), and a control part (100), the positive electrode part (70) is configured to be electrically connected to a positive output terminal of an external high-voltage box and a positive electrode of a battery pack, the negative electrode part (80) is configured to be electrically connected to a negative output terminal of the external high-voltage box and a negative electrode of the battery pack, and the control part (100) is configured to be electrically connected to a communication signal terminal of the external high-voltage box to detect states of the external high-voltage box and the battery pack; and
wherein the control part (100) and the positive electrode part (70) are arranged along a length direction or a width direction of the combiner cabinet.

2. The combiner cabinet according to claim 1, **characterized in that** the control part (100) and the positive electrode part (70) are arranged along the length direction of the combiner cabinet, and the positive electrode part (70) and the negative electrode part (80) are arranged along the width direction of the combiner cabinet.

3. The combiner cabinet according to claim 2, **characterized in that** the control part (100) comprises a first sub-control part (101) and a second sub-control part (103), and the first sub-control part (101), the positive electrode part (70), and the second sub-control part (103) are arranged in sequence along the length direction of the combiner cabinet.

4. The combiner cabinet according to claim 3, **characterized in that** the cabinet body (10) further comprises a first sidewall (13), a second sidewall (15), and a third sidewall (17), the second sidewall (15) and the third sidewall (17) are oppositely arranged, and the first sidewall (13) is located between the second sidewall (15) and the third sidewall (17); and
wherein the first sub-control part (101) is mounted on the second sidewall (15), and the second sub-control part (103) is mounted on the third sidewall (17).

5. The combiner cabinet according to claim 4, **characterized in that** the combiner cabinet further comprises:
a first layer plate (21) and a second layer plate (23) arranged along the width direction of the combiner cabinet, wherein the first layer plate (21) and the second layer plate (23) are mounted inside the mounting cavity, and the first layer plate (21) and the second layer plate (23) are both configured to mount the electrical component assembly (14);
wherein along the width direction of the combiner cabinet, a projection of at least a part of the first layer plate (21) on the first sidewall (13) is located above a projection of the second layer plate (23) on the first sidewall (13).

6. The combiner cabinet according to claim 5, **characterized in that** along the width direction of the combiner cabinet, a projection of the first sub-control part (101) on the first sidewall (13) is located above the projection of the second layer plate (23) on the first sidewall (13); and/or
wherein along the width direction of the combiner cabinet, a projection of the second sub-control part (103) on the first sidewall (13) is located above the projection of the second layer plate (23) on the first sidewall (13).

7. The combiner cabinet according to any one of claims 1-6, **characterized in that** the control part (100) comprises a battery management system (BMS) control member (31), the BMS control member (31) is configured to be electrically connected to the communication signal terminal of the external high-voltage box, and the BMS control member (31) is electrically connected to the positive electrode part (70) and the negative electrode part (80), respectively.

8. The combiner cabinet according to claim 7, **characterized in that** the electrical component assembly (14) further comprises an adjustment indicating part (200), the adjustment indicating part (200) is mounted on a side of the cabinet door (11) away from the mounting cavity (12), and the adjustment indicating part (200) is electrically connected to the BMS control member (31) and configured to adjust and indicate operating conditions of the battery pack;
optionally, the adjustment indicating part (200) comprises an indicator lamp module (41) and a switch module (43), and the indicator lamp module (41) and the switch module (43) are electrically connected to the control part (100), respectively.

9. The combiner cabinet according to any one of claims 1-8, **characterized in that** the positive electrode part (70) comprises a positive fuse (71), a positive high-voltage relay (72), and a positive electrode interface (73), the positive fuse (71), the positive high-voltage relay (72), and the positive electrode interface (73) are electrically connected in sequence, the positive fuse (71) is configured to be electrically connected to the positive output terminal of the external high-voltage box, and the positive electrode interface (73) is configured to be electrically connected to the positive electrode of the battery pack.

10. The combiner cabinet according to claim 1, **characterized in that** the electrical component assembly (14) is one of a plurality of electrical component assemblies (14), the plurality of electrical component assemblies (14) are configured to be electrically connected to a plurality of battery packs, and the plurality of electrical component assemblies (14) are arranged from top to bottom along a height direction of the combiner cabinet; and
wherein each of the plurality of electrical component assemblies (14) is configured to be electrically connected to an external multi-cluster high-voltage box and is configured to be electrically connected to a corresponding one of the plurality of battery packs;
optionally, each of the plurality of electrical component assemblies (14) comprises a plurality of positive electrode parts (70) and a plurality of negative electrode parts (80), each of the plurality of positive electrode parts (70) is arranged in a one-to-one correspondence to the plurality of negative electrode parts (80), the plurality of positive electrode parts (70) are electrically connected to the positive electrode of a corresponding one of the plurality of battery packs, respectively, and the plurality of the negative electrode parts (80) are electrically connected to the negative electrode of the corresponding one of the plurality of battery packs, respectively.

11. The combiner cabinet according to claim 10, **characterized in that** each of the plurality of electrical component assemblies (14) comprises an auxiliary-power part (300), and the auxiliary-power part (300) comprises an auxiliary-power positive fuse (301), an auxiliary-power negative fuse (303), an auxiliary-power positive interface (305), and an auxiliary-power negative interface (307);
wherein the auxiliary -power positive fuse (301) and the auxiliary-power positive interface (305) are electrically connected, and the auxiliary-power positive interface (305) is configured to be electrically connected to a positive electrode of an auxiliary power cabinet; and
wherein the auxiliary-power negative fuse (303) and the auxiliary-power negative interface (307) are electrically connected, and the auxiliary-power negative interface (307) is configured to be electrically connected to a negative electrode of the auxiliary power cabinet.

12. The combiner cabinet according to any one of claims 10-11, **characterized in that** each of the plurality of electrical component assemblies (14) further comprises a surge protection part (400) and a circuit breaker (74), the surge protection part (400) comprises a first surge fuse (401), a surge protection part (405), and a second surge fuse (403), and the circuit breaker (74) comprises a first circuit breaker (741) and a second circuit breaker (742); and
wherein the first circuit breaker (741), the first surge fuse (401), the surge protector (405), the second surge fuse (403), and the second circuit breaker (743) are electrically connected in sequence;
optionally, each of the plurality of electrical component assemblies (14) further comprises a positive high-voltage relay (72), a positive electrode interface (73), a negative high-voltage relay (82), and a negative electrode interface (83), the first circuit breaker (741), the positive high-voltage relay (72), and the positive electrode interface (73) are electrically connected in sequence, the positive electrode interface (73) is configured to be electrically connected to the positive electrode of a corresponding one of the plurality of battery packs, and the first circuit breaker (741) is configured to be electrically connected to the positive output terminal of the external high-voltage box; and
wherein the second circuit breaker (743), the negative high-voltage relay (82), and the negative electrode interface (83) are electrically connected in sequence, the negative electrode interface (83) is configured to be electrically connected to the negative electrode of the corresponding one of the plurality of battery packs, and the second circuit breaker (743) is configured to be electrically connected to the negative output terminal of the external high-voltage box.

13. The combiner cabinet according to any one of claims 1-12, **characterized in that** a top of the cabinet body (10) is provided with an air outlet (1010), the cabinet door (11) is provided with an air inlet (1030), and the air inlet (1030) and the air outlet (1010) are respectively communicated with the mounting cavity (12); and
wherein at least a part of the electrical component assembly (14) is located between the air inlet (1030) and the air outlet (1010).

14. The combiner cabinet according to claim 13, **characterized in that** the combiner cabinet further comprises:
an air outlet assembly mounted inside the mounting cavity (12), wherein the air outlet assembly is disposed close to the top of the cabinet body (10), gases enter the mounting cavity (12) through the air inlet (1030), and the air outlet assembly is configured to exhaust the gases inside the mounting cavity (12) through the air outlet (1010);
optionally, the air outlet assembly comprises a draught fan, a first filter mesh (601), and a second filter mesh (602), the first filter mesh (601) is mounted on the cabinet body (10) and configured to cover the air outlet (1010), and the second filter mesh (602) is mounted on the cabinet door (11) and is configured to cover the air inlet (1030).

15. An energy storage system, **characterized in that** the energy storage system comprises the combiner cabinet according to any one of claims 1-14.
